# EUROPEAN PATENT APPLICATION

(11) **EP 3 389 325 A1**
(43) Date of publication of application: **17.10.2018**
(21) Application number: 17747570.4
(22) Date of filing: 03.02.2017
(51) Int. Cl.: H04W 72/04, H04W 74/08

(54) **USER TERMINAL, WIRELESS BASE STATION, AND WIRELESS COMMUNICATION METHOD**

(30) Priority: 04.02.2016 JP 2016020310
(71) Applicant: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP); TAKAHASHI, Hideaki, Tokyo 100-6150 (JP); HAPSARI, Wuri Andarmawanti, Tokyo 100-6150 (JP); UCHINO, Tooru, Tokyo 100-6150 (JP)
(74) Representative: Hoffmann Eitle
(86) International application number: PCT/JP2017/004011
(87) International publication number: WO 2017/135419

(57) **Abstract**

The present invention provides a user equipment in a wireless communication system in which communication is performed using an anchor carrier and a different carrier from the anchor carrier, the user equipment being an NB-IoT terminal, the user equipment comprising: a transmission and reception unit that performs transmission and reception of a message in a random access procedure with a radio base station; and a control unit that configures a carrier signaled from the radio base station to be the different carrier.

## Description

### Technical Field

The present invention relates to a user equipment, a radio base station, and a wireless communication method for next-generation mobile communication systems.

### Background Art

In UMTS (Universal Mobile Telecommunications System) networks, LTE (Long Term Evolution) has been specified to achieve, e.g., higher data rates and lower delays (non-patent literature 1). To achieve broader bands and higher speeds than LTE, successors to LTE (also called, e.g., LTE-A (LTE-Advanced), FRA (Future Radio Access), 4G, 5G, and LTE Rel. 13, 14, 15,...) are also under study.

With the recent reduction in cost of communication apparatuses, techniques for inter-device communication (M2M: Machine-to-Machine) have been actively developed in which devices connected to a network perform automatic control by mutual communication without human hands. Among the M2M systems, especially 3GPP (Third Generation Partnership Project) has made progress in standardization regarding MTC (Machine Type Communication) optimization as an inter-device communication cellular system (non-patent literature 2). MTC user equipment (MTC UEs (User Equipment)) may be utilized in a wide variety of fields such as electric meters, gas meters, automatic vending machines, vehicles, and other kinds of industrial apparatuses.

### Citations List

### Non-patent Literature

Non-patent literature 1: 3GPP TS 36.300 "Evolved Universal Terrestrial Radio Access (E-UTRA) and Evolved Universal Terrestrial Radio Access Network (E-UTRAN); Overall description; Stage 2"
Non-patent literature 2: 3GPP TR 36.888 "Study on provision of low-cost Machine-Type Communications (MTC) User Equipments (UEs) based on LTE (Release 12)"

### Summary of Invention

### Technical Problem

In MTC, to reduce the costs and improve the coverage area in cellular systems, a demand is growing for MTC user equipment (LC (Low-Cost)-MTC terminals or LC-MTC UEs) which can be implemented in a simple hardware configuration. As the communication schemes of such LC-MTC terminals, LTE communication in very narrow bands (which may also be called, e.g., NB-IoT (Narrow Band Internet of Things), NB-LTE (Narrow Band LTE), NB cellular IoT (Narrow Band cellular Internet of Things), or a clean slate) is under study. "NB-IoT" to be referred to in this specification hereinafter includes, e.g., the above-mentioned NB-LTE, NB cellular IoT, and clean slate.

The band used in a user equipment which supports NB-IoT (to be referred to as an NB-IoT terminal hereinafter) is also expected to be limited to a band (e.g., 180 kHz; also called, e.g., one RB (Resource Block) or PRB (Physical Resource Block)) narrower than the minimum system band (1.4 MHz) of an existing LTE system (e.g., an LTE system of Rel. 12 or earlier).

In such NB-IoT terminals, since the bands used are limited to narrow bands, the overhead is expected to be relatively high due, e.g., to the presence of sync signals or broadcast signals. Operation which uses a plurality of narrow bands has been examined, but it poses a challenge in how and when a band used is to be selected by an NB-IoT terminal.

The present invention has been made in consideration of the above-described issue, and has as one object to provide a user equipment, a radio base station, and a wireless communication method which can make an early transition to a band used with less overhead, when a plurality of narrow bands in a system band is used for operation.

### Solution to Problem

An aspect of the present invention provides a user equipment in a wireless communication system in which communication is performed using an anchor carrier and a different carrier from the anchor carrier, the user equipment being an NB-IoT terminal, the user equipment comprising: a transmission and reception unit that performs transmission and reception of a message in a random access procedure with a radio base station; and a control unit that configures a carrier signaled from the radio base station to be the different carrier.

### Advantageous Effects of Invention

According to the present invention, since a second narrow band can be specified as a transition destination before completion of random access, a user equipment can be caused to make an early transition to a band used with less overhead.

### Brief Description of Drawings

FIG. 1 is a diagram for explaining a band used in an NB-IoT terminal.
FIG. 2 is a diagram illustrating exemplary allocation of a narrow band in the NB-IoT terminal.
FIGS. 3A and 3B are diagrams illustrating exemplary methods for operation using a plurality of narrow bands.
FIG. 4 is a transition diagram from SIB transmission to completion of random access.
FIG. 5 is a diagram for explaining a transition operation based on a third transition method.
FIG. 6 is a diagram illustrating the schematic configuration of a wireless communication system according to the present embodiment.
FIG. 7 is a diagram illustrating an exemplary configuration of an entire radio base station according to the present embodiment.
FIG. 8 is a diagram illustrating an exemplary functional configuration of the radio base station according to the present embodiment.
FIG. 9 is a diagram illustrating an exemplary configuration of an entire user equipment according to the present embodiment.
FIG. 10 is a diagram illustrating an exemplary functional configuration of the user equipment according to the present embodiment.
FIG. 11 is a diagram illustrating an exemplary hardware configuration of the radio base station and the user equipment according to the present embodiment.

### Description of Embodiments

In NB-IoT terminals, simplification of their hardware configuration with tolerance to lower throughputs has been examined. In NB-IoT terminals, lower peak rates, limitation of the TBS (Transport Block Size), limitation of the resource block (to be also referred to as, e.g., an RB (Resource Block) or a PRB (Physical Resource Block) hereinafter), and limitation of the reception RF (Radio Frequency), for example, have been considered to be adopted, compared to existing user equipment (e.g., LTE terminals of Rel. 12 or earlier).

Unlike an LTE terminal that uses a band, the upper limit of which is set to a system band (e.g., 20 MHz (100 RB) or one component carrier), an NB-IoT terminal uses a band, the upper limit of which is limited to a predetermined NB (Narrow Band such as 180 kHz or 1.4 MHz). For example, the predetermined narrow band may be the same as the minimum system band (e.g., 1.4 MHz or 6 PRB) of an existing LTE system (an LTE system of Rel. 12 or earlier; to be also simply referred to as an LTE system hereinafter) or be a part of this band (e.g., 180 kHz or 1 PRB).

In this manner, the NB-IoT terminal can also be construed as a terminal that uses a band, the upper limit of which is narrower than that of the existing LTE terminals, or a terminal capable of transmission and/or reception (to be referred to as transmission and reception hereinafter) in a band (e.g., a band narrower than 1.4 MHz) narrower than that of the existing LTE terminals. The NB-IoT terminal has been investigated for its operation in the system band of the LTE system in consideration of backward compatibility with the existing LTE systems. For example, in the system band of the LTE system, frequency multiplexing may be supported between the NB-IoT terminal limited in band and the existing LTE terminal that is not limited in band. The NB-IoT may even be operated using guard bands or dedicated frequencies not only in the LTE system band but also between carriers adjacent in the LTE system band.

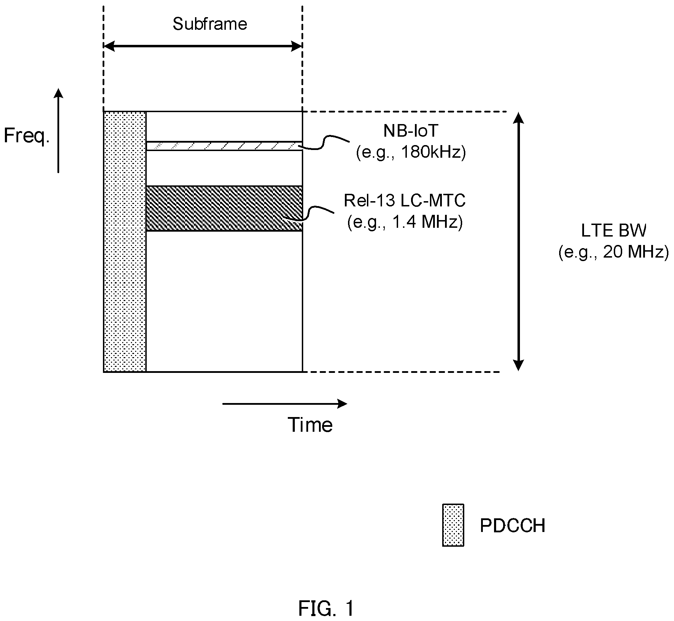

FIG. 1 is a diagram illustrating exemplary allocation of the band used in the NB-IoT terminal. Referring to FIG. 1, bands used in the NB-IoT terminal are set in a part of the system band of the LTE system. Although the following description assumes that the band used in the NB-IoT terminal is set to 180 kHz, the present invention is not limited to this. It suffices to set the band used in the NB-IoT terminal narrower than the system band of the LTE system and, for example, equal to or less than a band (e.g., 1.4 MHz) used in an LC-MTC terminal of Rel. 13.

The frequency position of a narrow band serving as the band used in the NB-IoT terminal is preferably variable in the system band. For example, the NB-IoT terminal preferably performs communication using a frequency resource different for each predetermined period (e.g., subframe). This can achieve traffic offloading for the NB-IoT terminal and a frequency diversity effect, thus keeping the frequency use efficiency relatively high. Therefore, the NB-IoT terminal preferably has an RF retuning function in consideration of the use of frequency hopping or frequency scheduling.

The NB-IoT terminal may use different bands or the same band in a downlink and an uplink. The band used in downlink transmission and reception may also be referred to as a DL NB (Downlink Narrow Band). The band used in uplink transmission and reception may also be referred to as a UL NB (Uplink Narrow Band).

The NB-IoT terminal receives DCI (Downlink Control Information) using a downlink control channel allocated in a narrow band. The downlink control channel may also be referred to as, e.g., a PDCCH (Physical Downlink Control Channel), an EPDCCH (Enhanced Physical Downlink Control Channel), an M-PDCCH (MTC PDCCH), or an NB-PDCCH.

The NB-IoT terminal receives downlink data using a downlink shared channel allocated in a narrow band. The downlink shared channel may also be referred to as, e.g., a PDSCH (Physical Downlink Shared Channel), an M-PDSCH (MTC PDSCH), or an NB-PDSCH.

The NB-IoT terminal transmits UCI (Uplink Control Information), such as retransmission control information (HARQ-ACK: Hybrid Automatic Repeat reQuest-ACKnowledge) and CSI (Channel State Information), using an uplink control channel allocated in a narrow band. The uplink control channel may also be referred to as, e.g., a PUCCH (Physical Uplink Control Channel), an M-PUCCH (MTC PUCCH), or an NB-PUCCH.

The NB-IoT terminal receives UCI or/and uplink data using an uplink shared channel allocated in a narrow band. The uplink shared channel may also be referred to as, e.g., a PUSCH (Physical Uplink Shared Channel), an M-PUSCH (MTC PUSCH), or an NB-PUSCH.

The NB-IoT terminal receives broadcast information using a broadcast channel allocated in a narrow band. The broadcast channel may also be referred to as, e.g., a PBCH (Physical Broadcast Channel), an M-PBCH (MTC PBCH), or an NB-PBCH.

The present invention is not limited to the above-mentioned channels, and the conventional channels used for the same purposes may be denoted using "M" representing MTC, "N" representing NB-IoT, or "NB" representing NB-IoT. Although a downlink control channel, a downlink shared channel, an uplink control channel, an uplink shared channel, and a broadcast channel used in the above-mentioned narrow bands will be referred to as a PDCCH, a PDSCH, a PUCCH, a PUSCH, and a PBCH, respectively, hereinafter, their names are not limited to these examples, as described above.

An SIB (System Information Block) may be defined as system information for the NB-IoT terminal, and the SIB may also be referred to as, e.g. an M-SIB (MTC SIB) or an NB-SIB. A PSS (Primary Synchronization Signal) and an SSS (Secondary Synchronization Signal) may further be defined as sync signals for the NB-IoT terminal. The PSS may also be referred to as, e.g., an M-PSS (MTC PSS) or an NB-PSS, and the SSS may also be referred to as, e.g., an M-SSS (MTC SSS) or an NB-SSS.

In NB-IoT, to enhance the coverage, repetitive transmission/reception may be performed in which the same downlink signal (e.g., a PDCCH or a PDSCH) and/or uplink signal (e.g., a PUCCH or a PUSCH) is transmitted and received across subframes. The number of subframes in which the same downlink signal and/or uplink signal is transmitted and received is also called a repetition number. The repetition number may be represented by a repetition level. The repetition level may also be referred to as a CE (Coverage Enhancement) level.

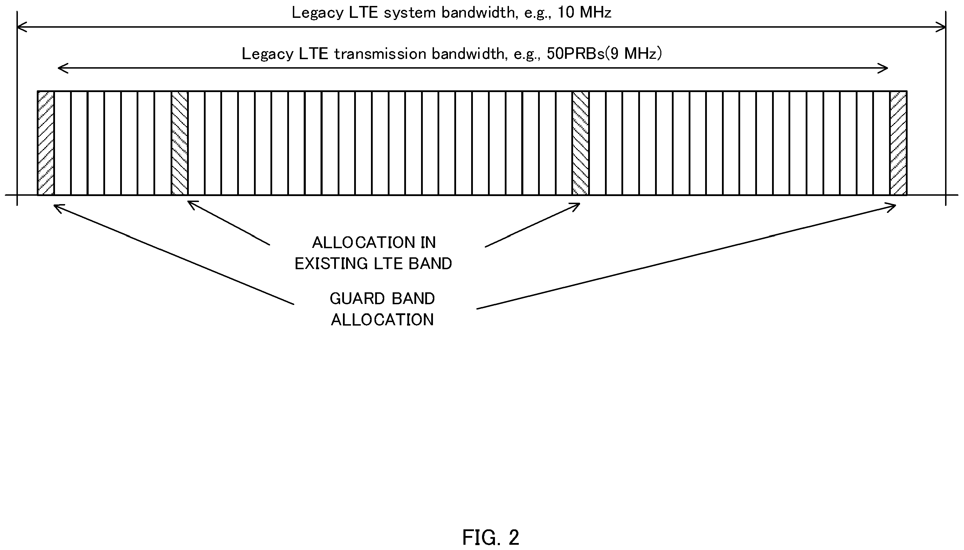

Since the band used in NB-IoT is set narrower than that in LC-MTC, transmission of broadcast information or sync signals increases the overhead, resulting in inefficient communication. Under the circumstances, a method has been examined for operation using a plurality of narrow bands such as in-bands in the existing system band or guard bands between adjacent system bands, as illustrated as FIG. 2. FIG. 2 illustrates exemplary setting of two narrow bands (e.g., 180 kHz) as in-bands for an LTE transmission bandwidth (e.g., 9 MHz) in an existing system bandwidth (e.g., 10 MHz), and exemplary setting of two narrow bands as guard bands on both outer sides of the LTE transmission bandwidth. Three or more narrow bands may be set in the system band.

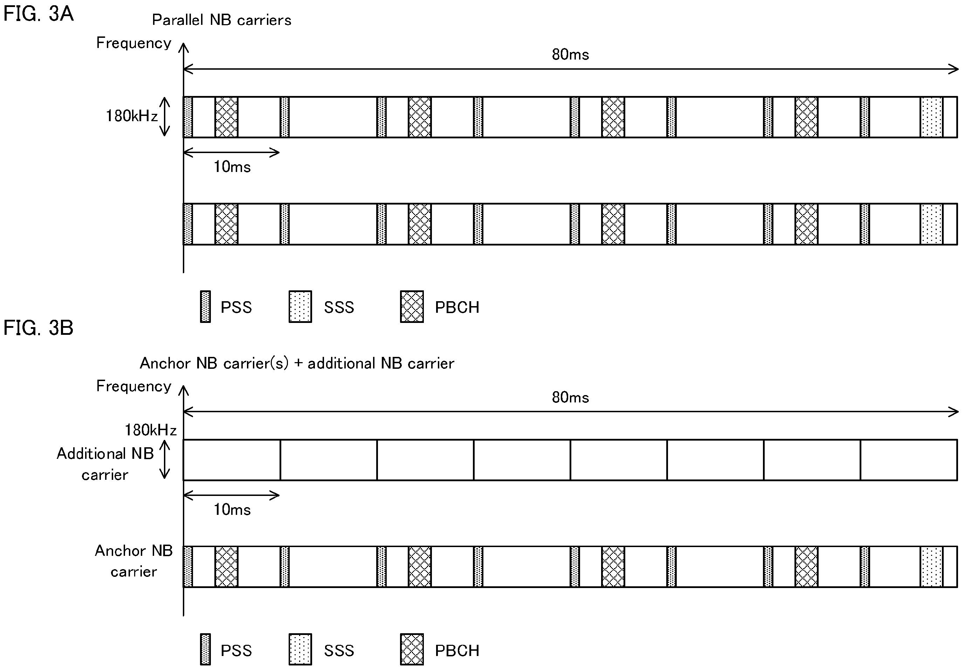

FIG. 3 illustrates diagrams of exemplary methods which use a plurality of narrow bands. As the methods that use a plurality of narrow bands, a method (Parallel NB carriers) which uses narrow bands having the same band configuration (band type) and a method (Anchor NB carrier(s) + Additional NB carrier) which uses narrow bands having different band configurations (band types) have been examined. The NB-IoT terminal uses any of the narrow bands as a band used. The narrow bands are set by, e.g., information for indicating carrier frequencies in an SIB.

The method illustrated as FIG. 3A uses the same band configuration in which a PSS, an SSS, a PBCH, and the like are transmitted to the narrow bands. Assume, for example, that a PSS is transmitted at a period of 10 ms, an SSS is transmitted at a period of 80 ms, and a PBCH is transmitted at a period of 20 ms in each narrow band. In this case, the NB-IoT terminal camps on a narrow band detected by a cell search, which may consume a relatively high power due to the presence of a large number of narrow band candidates. Little influence is exerted on the existing standard specifications, but a PSS, an SSS, a PBCH, and the like are similarly transmitted in the narrow bands, thus increasing the overhead related to control signals in the entire system.

The method illustrated as FIG. 3B uses as band configurations, an anchor NB carrier (to be referred to as such for the sake of convenience hereinafter) in which a PSS, an SSS, a PBCH, and the like are transmitted to the narrow bands, and an additional NB carrier (to be referred to as such for the sake of convenience hereinafter) in which none of a PSS, an SSS, a PBCH, and the like are transmitted to them. The narrow band on which the NB-IoT terminal camps by a cell search is limited to an anchor NB carrier, thus keeping the power that may be consumed by the cell search less. However, since an anchor NB carrier in which a PSS, an SSS, a PBCH, and the like are transmitted has a relatively high overhead, a transition of the band used may be preferably made to an additional NB carrier in which none of a PSS, an SSS, a PBCH, and the like are transmitted at a predetermined timing.

In this case, a method is available for making a transition of the band used to a second narrow band by RRC reconfiguration after RRC connection establishment when the radio base station receives a random access completion message from the NB-IoT terminal. However, as the RRC overhead increases, a transition from an anchor NB carrier delays more. In view of this, the inventors of the present invention focused attention on the fact that a transition can be made earlier by allowing the NB-IoT terminal to specify a narrow band as a transition destination before completion of random access, and come up with the present invention.

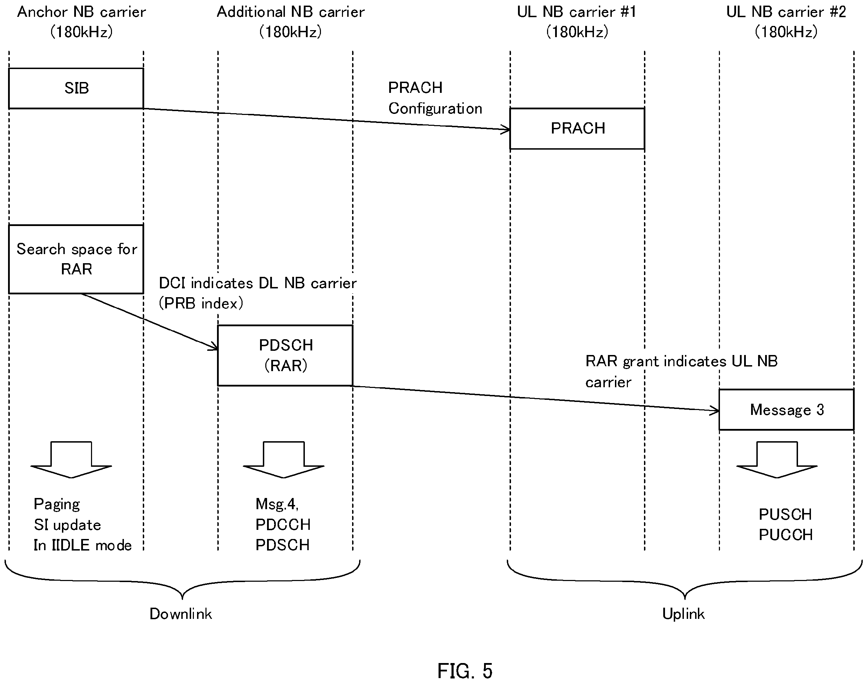

In the following description, among the narrow bands, a narrow band used as an anchor NB carrier for a downlink is defined as a first narrow band serving as a transition source, and a narrow band used as an additional NB carrier for a downlink or an NB carrier for an uplink is defined as a second narrow band serving as a transition destination (see FIG. 5). The anchor NB carrier may also be referred to as, e.g., a type1 carrier or an anchor PRB. The additional NB carrier may also be referred to as a type2 carrier or an additional PRB, or simply as an NB carrier. The anchor NB carrier may be set in a plurality of narrow bands or a single narrow band within the system band.

An embodiment of the present invention will be described in detail below with reference to the drawings. Although the band used in the NB-IoT terminal is assumed to be limited to 180 kHz (1 PRB) that is narrower than the minimum system band (1.4 MHz) of the existing LTE system, the present invention is not limited to this. Any band may be used in the NB-IoT terminal as long as it is a band narrower than the system band of the existing LTE system, such as 1.4 MHz that is equal to the minimum system band of the existing LTE system, or a band narrower than 180 kHz.

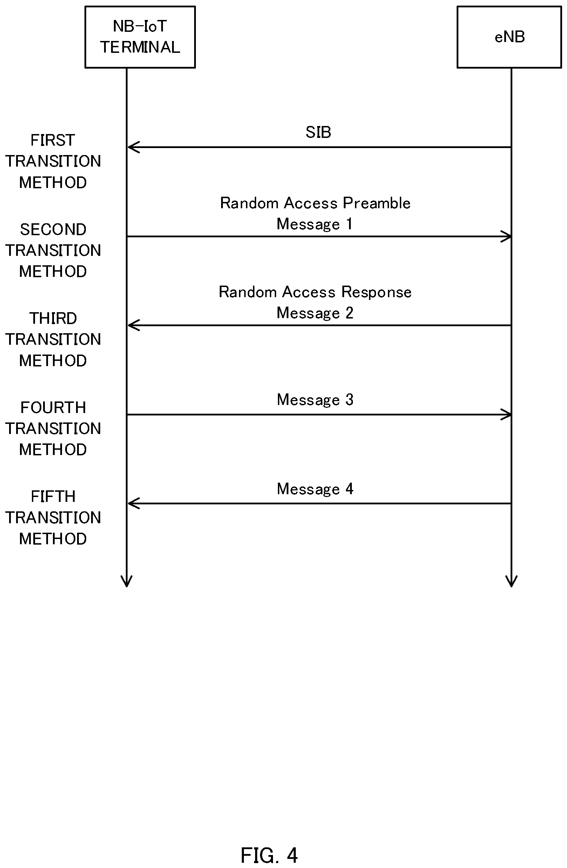

FIG. 4 is a transition diagram from SIB transmission to completion of random access. FIG. 5 is a diagram for explaining a transition operation based on a third transition method. As illustrated as FIG. 4, as methods for a transition from a first narrow band to a second narrow band, five methods for a transition from SIB transmission to completion of random access, for example, are available. Assume that the NB-IoT terminal has detected a frame timing by a PSS and an SSS transmitted in the first narrow band and has received information preferably used in SIB reception by an MIB (Master Information Block) transmitted in the first narrow band.

The radio base station transmits an SIB for setting narrow bands, as illustrated as FIG. 4. The NB-IoT terminal selects a set resource of a PRACH set across the narrow bands by the SIB, and transmits a random access preamble (PRACH) (Message 1) by the selected set resource of the PRACH. Upon detecting the random access preamble, the radio base station transmits an RAR (Random Access Response) (Message 2) to the PRACH as a response thereto. Upon receiving the random access response, the NB-IoT terminal transmits a data signal (Message 3) by an uplink shared channel (PUSCH) specified by a UL grant in the random access response. Upon receiving Message 3, the radio base station transmits a contention resolution message (Message 4) to the user equipment. With the above-mentioned procedure, the NB-IoT terminal completes the random access processing and establishes connection.

### (First Transition Method)

In a first transition method, a transition of the band used in the NB-IoT terminal is made from a first narrow band (anchor NB carrier) to a second narrow band after SIB reception. More specifically, an SIB is received from the radio base station by the NB-IoT terminal and used to set a PRACH across narrow bands. A narrow band selected as a set resource of the PRACH is specified as a second narrow band (NB carrier) for an uplink, and a narrow band associated with the set resource of the PRACH is specified as a second narrow band (additional NB carrier) for a downlink. The NB-IoT terminal makes a transition of the band used from the first narrow band to the second narrow band after SIB reception and continues the subsequent random access procedure. A second narrow band may be associated with a set resource of a PRACH by broadcast information or associated with a set resource of a PRACH in advance as a specification. A second narrow band for a downlink may be specified in later transitions by second to fifth transition methods.

### (Second Transition Method)

In a second transition method, a transition of the band used in the NB-IoT terminal is made from a first narrow band (anchor NB carrier) to a second narrow band after transmission of a random access preamble. More specifically, when a PRACH is set in the narrow band by an SIB for the NB-IoT terminal, a narrow band associated with a set resource of the PRACH is specified as a second narrow band (additional NB carrier) for a downlink. A second narrow band (NB carrier) for an uplink is not specified at the current point in time, and is specified in later transitions by third to fifth transition methods. The NB-IoT terminal makes a transition of the band used from the first narrow band to the second narrow band after transmission of a random access preamble and continues the subsequent random access procedure. A second narrow band may be associated with a set resource of a PRACH by broadcast information or associated with a set resource of a PRACH in advance as a specification.

### (Third Transition Method)

In a third transition method, a transition of the band used in the NB-IoT terminal is made from a first narrow band (anchor NB carrier) to a second narrow band after reception of a random access response. As illustrated as FIG. 5, the NB-IoT terminal detects DCI (Downlink Control Information) in a common search space for a downlink control channel and specifies an allocated resource of a random access response on a downlink shared channel (PDSCH). The NB-IoT terminal receives a random access response from the radio base station by the allocated resource. In this case, a narrow band indicated by the PRB index of the DCI is specified as a second narrow band (additional NB carrier) for a downlink, and a narrow band indicated by a UL grant for the random access response is specified as a second narrow band (NB carrier) for an uplink. The NB-IoT terminal makes a transition of the band used from the first narrow band to the second narrow band after reception of a random access response and continues the subsequent random access procedure.

In this case, for the downlink control channel, an RA field for issuing an instruction of a random access response is set in the common search space. The downlink control channel may always be used for transmission by the first narrow band (anchor NB carrier) or transmission by a narrow band (additional NB carrier) other than the first narrow band with a change in transmission band by an SIB. As for the PRB index of the DCI, the number of DCI bits can be reduced by narrowing down the candidates in advance by the SIB and, for example, four narrow bands are specified with two bits. In the subsequent downlink transmission and reception, a narrow band after a transition may always be set as a band used, or the band used may be dynamically switched by the DCI. When the band used is fixed, a field for indicating a band used may not be ensured in a user-specific search space.

An RA field for specifying a narrow band for an uplink is set in a UL grant for a random access response. When such an RA field is unavailable, a narrow band selected as a set resource of a PRACH on the NB-IoT terminal side may be specified as a second narrow band for an uplink, or a narrow band indicated by the DCI may be specified as a second narrow band for an uplink.

### (Fourth Transition Method)

In a fourth transition method, a transition of the band used in the NB-IoT terminal is made from a first narrow band (anchor NB carrier) to a second narrow band after transmission of Message 3. More specifically, narrow bands indicated by broadcast information notified in advance or a random access response are specified as a second narrow band (NB carrier) for an uplink and a second narrow band (additional NB carrier) for a downlink. The NB-IoT terminal makes a transition of the band used from the first narrow band to the second narrow band after transmission of Message 3 and continues the subsequent random access procedure. Since Message 3 is to be retransmitted, the NB-IoT terminal may make a transition of the band used upon receiving an ACK (Acknowledgement) signal with respect to Message 3 from the radio base station. The NB-IoT terminal may make a transition of the band used upon transmitting HARQ (Hybrid Automatic Repeat reQuest) a certain number of times.

### (Fifth Transition Method)

In a fifth transition method, a transition of the band used in the NB-IoT terminal is made from a first narrow band (anchor NB carrier) to a second narrow band after reception of Message 4. More specifically, narrow bands indicated by broadcast information notified in advance, a random access response, or Message 4 are specified as a second narrow band (NB carrier) for an uplink and a second narrow band (additional NB carrier) for a downlink. The NB-IoT terminal makes a transition of the band used from the first narrow band to the second narrow band after reception of Message 4. The timings of transitions from the first narrow band to the second narrow band are not limited to the above-mentioned five timings, and the transitions may be made after RRC connection.

In the third to fifth transition methods, narrow bands associated with an RAR window (Random Access Response window) may be specified as a second narrow band for an uplink and a second narrow band for a downlink. In other words, a second narrow band for an uplink and a second narrow band for a downlink are specified in accordance with an RAR window in which a random access response is received. In this manner, a second narrow band is specified in accordance with the time to receive a random access response. A second narrow band may be associated with an RAR window by broadcast information or associated with an RAR window in advance as a specification.

In this manner, a second narrow band is specified by a set resource of a PRACH, DCI for a downlink control channel, a UL grant for a random access response, an RAR window, or broadcast information. A transition can be made from the first narrow band to the second narrow band at one of the timings after SIB reception, after transmission of a random access preamble, after reception of a random access response, after transmission of Message 3, after reception of an ACK signal with respect to Message 3, after reception of Message 4, and after RRC connection.

With these transition methods, a second narrow band is specified in the period from SIB reception until completion of random access, new RRC reconfiguration may not be set after RRC connection establishment. The present invention is not limited to the above-mentioned transition methods, and any transition method may be employed as long as it can specify a second narrow band as a transition destination from a first narrow band in a system band before completion of random access and make a transition of the band used from the first narrow band to the second narrow band. A transition may be made to a second narrow band, for example, after RRC connection or after UE-ID acquisition by associating the second narrow band with an UE-ID.

In the first narrow band, measurement, paging, and the like may be performed as well as transmission and reception of a PSS, an SSS, and broadcast information and parts or all of the random access procedure. In the second narrow band, parts or all of the random access procedure and data transmission and reception are performed. Since the first and second narrow bands serve as in-bands or guard bands in the same system band, a measurement result, a path-loss estimated value, and the like obtained in the first narrow band are applicable to the second narrow band. The present invention is not limited to a configuration which specifies a second narrow band from narrow bands set by an SIB, and a second narrow band may be specified from any narrow band in the system band.

Since the uplink traffic is heavy in IoT, only a first narrow band (anchor NB carrier) may be defined on a downlink, while a second narrow band is used only on an uplink. In other words, a transition of the band used may be made by narrow bands only on an uplink. In this case, a second narrow band for an uplink may be specified by a set resource of a PRACH, DCI for a downlink control channel, or a UL grant for a random access response.

An anchor NB carrier is defined for the sake of convenience in the foregoing description, the present invention is not limited to this definition. Another definition may be given such that, for example, when the NB-IoT terminal uses the above-mentioned method for a transition after RRC connection establishment and the first to fifth transition methods to make a transition to a second narrow band different from a first narrow band on which it camps first, the NB-IoT terminal may not receive signals such as an NB-PBCH, an NB-PSS, and an NB-SSS in the second narrow band. In this case, in the relevant subframes, an NB-PDCCH, a PDSCH, and the like are received. On the other hand, when the NB-IoT terminal is instructed to perform, e.g., paging, RACH procedure, or system information updating during a transition to the second narrow band, it may make a transition to the first narrow band again and change to an operation for receiving an NB-PBCH, an NB-PSS, an NB-SSS, and the like.

### (Wireless Communication System)

The configuration of a wireless communication system according to an embodiment of the present invention will be described below. The wireless communication method according to each of the above-mentioned aspects is applied to the wireless communication system. The wireless communication methods according to the respective aspects may be used independently or in combination. Although an NB-IoT terminal will be taken herein as an exemplary user equipment which exclusively uses a narrow band, the present invention is not limited to this.

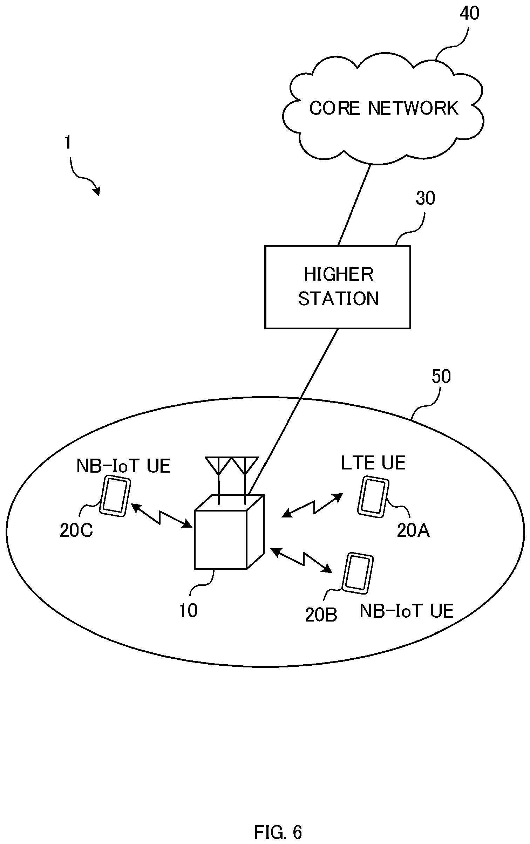

FIG. 6 is a diagram illustrating the schematic configuration of a wireless communication system according to an embodiment of the present invention. A wireless communication system 1 illustrated as FIG. 6 exemplifies an LTE system applied to the network domain of a machine communication system. In the wireless communication system 1, CA (Carrier Aggregation) and/or DC (Dual Connectivity) which integrates fundamental frequency blocks (component carriers) with the system bandwidth of the LTE system as a unit is applicable. Although the LTE system is set in a system band ranging from a minimum of 1.4 MHz to a maximum of 20 MHz for both downlinks and uplinks, the present invention is not limited to this configuration.

The wireless communication system 1 may be called, e.g., SUPER 3G, LTE-A (LTE-Advanced), IMT-Advanced, 4G (4th generation mobile communication system), 5G (5th generation mobile communication system), or FRA (Future Radio Access).

The wireless communication system 1 includes a radio base station 10 and user equipment 20A, 20B, and 20C wirelessly connected to the radio base station 10. The radio base station 10 is connected to a higher station 30 and further connected to a core network 40 via the higher station 30. Although the higher station 30 includes, e.g., an access gateway device, an RNC (Radio Network Controller), and an MME (Mobility Management Entity), the present invention is not limited to this.

The user equipment 20 (20A - 20C) can communicate with the radio base station 10 in a cell 50. For example, the user equipment 20A is a user equipment (to be referred to as an LTE terminal (LTE UE: LTE User Equipment) hereinafter) which supports LTE (Rel. 10 or earlier) or LTE-Advanced (including Rel. 10 or later), and the remaining user equipment 20B and 20C are NB-IoT terminals (NB-IoT UEs (NB-IoT User Equipment)) serving as communication devices in a machine communication system. The user equipment 20A, 20B, and 20C will be collectively referred to as user equipment 20 hereinafter when no distinction is made between them. The user equipment 20 may also be called, e.g., a UE (User Equipment).

The NB-IoT terminals 20B and 20C are user equipment which exclusively use bands narrower than the minimum system bandwidth supported by the existing LTE system. The NB-IoT terminals 20B and 20C may also be terminals compatible with various communication schemes such as LTE and LTE-A, and may be implemented not only in fixed communication terminals such as electric meters, gas meters, and automatic vending machines, but also in mobile communication terminals such as vehicles. The user equipment 20 may directly communicate with another user equipment 20 or communicate with it via the radio base station 10.

The wireless communication system 1 uses as a radio access scheme, OFDMA (Orthogonal Frequency Division Multiple Access) for downlinks and SC-FDMA (Single-Carrier Frequency Division Multiple Access) for uplinks. OFDMA is a multicarrier transmission scheme for communication by dividing a frequency band into narrow frequency bands (subcarriers) and mapping data to each subcarrier. SC-FDMA is a single-carrier transmission scheme for dividing the system bandwidth into bands including one or continuous resource block for each terminal, and allowing these terminals to use different bands, thus alleviating inter-terminal interference. The uplink and downlink radio access schemes are not limited to these combinations.

The wireless communication system 1 uses, e.g., a PDSCH (Physical Downlink Shared Channel) shared by each user equipment 20, a PBCH (Physical Broadcast Channel), and a downlink L1/L2 control channel as downlink channels. The PDSCH is used to transmit user data, upper layer control information, and a predetermined SIB (System Information Block). The PBCH is used to transmit an MIB (Master Information Block).

The downlink L1/L2 control channel includes, e.g., a PDCCH (Physical Downlink Control Channel), an EPDCCH (Enhanced Physical Downlink Control Channel), a PCFICH (Physical Control Format Indicator Channel), and a PHICH (Physical Hybrid-ARQ Indicator Channel). The PDCCH is used to transmit, e.g. DCI (Downlink Control Information) including scheduling information of PDSCHs and PUSCHs. The PCFICH is used to transmit the number of OFDM symbols used in the PDCCH. The PHICH is used to transmit retransmission control information (HARQ-ACK) of the PUSCH. The EPDCCH is frequency-division-multiplexed with the PDSCH and used to transmit, e.g., DCI, like the PDCCH.

The wireless communication system 1 uses, e.g., a PUSCH (Physical Uplink Shared Channel) shared by each user equipment 20, an uplink L1/L2 control channel (PUCCH: Physical Uplink Control Channel), and a PRACH (Physical Random Access Channel) as uplink channels. The PUSCH may also be referred to as an uplink data channel. The PUSCH is used to transmit user data and upper layer control information. The PUCCH is used to transmit, e.g., downlink wireless quality information (CQI: Channel Quality Indicator) and retransmission control information (HARQ-ACK). The PRACH is used to transmit a random access preamble for establishing connection with a cell.

Channels for an MTC terminal/NB-IoT terminal may be denoted with "M" representing MTC or "NB" representing NB-IoT, and a PDCCH/EPDCCH, a PDSCH, a PUCCH, a PUSCH, and a PBCH for an MTC terminal/NB-IoT terminal may also be referred to as, e.g., an M (NB)-PDCCH, an M (NB)-PDSCH, an M (NB)-PUCCH, an M (NB)-PUSCH, and an M (NB)-PBCH, respectively. The above-mentioned channels will be simply referred to as a PDCCH, PDSCH, a PUCCH, a PUSCH, and a PBCH hereinafter when no distinction is made between them.

The wireless communication system 1 transmits, e.g., a CRS (Cell-specific Reference signal), a CSI-RS (Channel State Information-Reference Signal), a DMRS (DeModulation Reference Signal), and a PRS (Positioning Reference Signal) as downlink reference signals. The wireless communication system 1 further transmits, e.g., an SRS (Sounding Reference Signal) and a DMRS (DeModulation Reference Signal) as uplink reference signals. The DMRS may also be referred to as a user equipment-specific reference signal (UE-specific reference signal). The reference signals to be transmitted are not limited to these examples.

### <Radio Base Station>

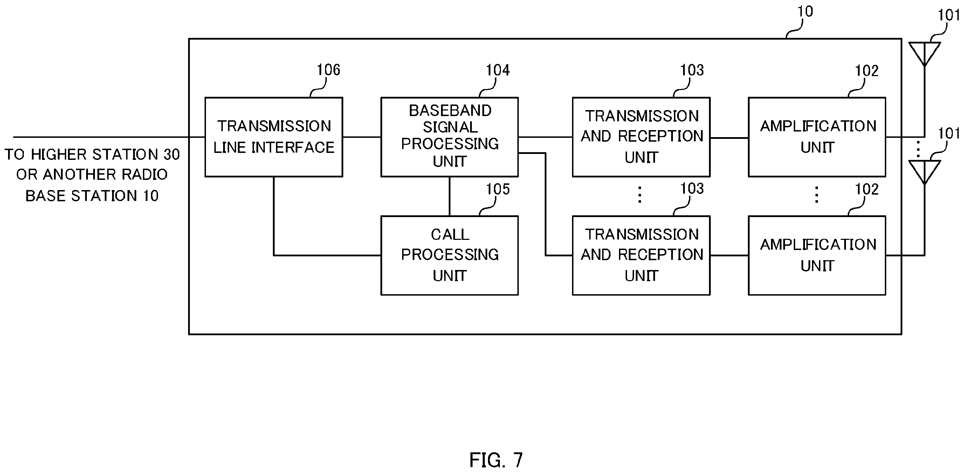

FIG. 7 is a diagram illustrating an exemplary configuration of an entire radio base station according to an embodiment of the present invention. The radio base station 10 includes at least transmission and reception antennas 101, amplification units 102, transmission and reception units 103, a baseband signal processing unit 104, a call processing unit 105, and a transmission line interface 106.

User data transmitted from the radio base station 10 to the user equipment 20 by a downlink is input from the higher station 30 to the baseband signal processing unit 104 via the transmission line interface 106.

The baseband signal processing unit 104 performs transmission processing for the user data, such as PDCP (Packet Data Convergence Protocol) layer processing, user data division and coupling, RLC (Radio Link Control) layer transmission processing such as RLC retransmission control, MAC (Medium Access Control) retransmission control (e.g., HARQ (Hybrid Automatic Repeat reQuest) transmission processing), scheduling, transport format selection, channel encoding, IFFT (Inverse Fast Fourier Transform) processing, and precoding processing, and transfers the user data to each transmission and reception unit 103. Transmission processing such as channel encoding and IFFT is also performed for downlink control signals, which are then transferred to each transmission and reception unit 103.

Each transmission and reception unit 103 converts a baseband signal precoded and output from the baseband signal processing unit 104 for each antenna into a radio frequency band and transmits it. The transmission and reception unit 103 may be implemented as a transmitter/receiver, a transmission and reception circuit, or a transmission and reception device described on the basis of a common understanding in the technical field according to the present invention. The transmission and reception unit 103 may serve as an integrated transmission and reception unit or include a transmission unit and reception unit.

Radio frequency signals after frequency conversion by the transmission and reception units 103 are amplified by the amplification units 102 and transmitted from the transmission and reception antennas 101. The transmission and reception units 103 can transmit and receive various signals using a narrow bandwidth (e.g., 180 kHz) limited more than the system bandwidth (e.g., one component carrier).

As for uplink signals, a radio frequency signal received by each transmission and reception antenna 101 is amplified by the corresponding amplification unit 102. Each transmission and reception unit 103 receives the uplink signal amplified by the amplification unit 102. Each transmission and reception unit 103 performs frequency conversion of the received signal into a baseband signal and outputs it to the baseband signal processing unit 104.

The baseband signal processing unit 104 performs FFT (Fast Fourier Transform) processing, IDFT (Inverse Discrete Fourier Transform) processing, error correction decoding, MAC retransmission control reception processing, and RLC layer/PDCP layer reception processing, for user data contained in input uplink signals, and transfers the user data to the higher station 30 via the transmission line interface 106. The call processing unit 105 performs call processing such as communication channel setup and release, state management of the radio base station 10, and radio resource management.

The transmission line interface 106 exchanges signals with the higher station 30 via a predetermined interface. The transmission line interface 106 may exchange signals with another radio base station 10 (backhaul signaling) via an interface between base stations (e.g., an X2 interface or an optical fiber conforming to the CPRI (Common Public Radio Interface)).

The transmission and reception unit 103 transmits, e.g., sync signals, reference signals, control signals, and data signals to the user equipment 20 in a narrow band. The transmission and reception unit 103 receives, e.g., reference signals, control signals, and data signals from the user equipment 20 in a narrow band. More specifically, the transmission and reception unit 103 transmits DCI (Downlink Control Information). The transmission and reception unit 103 further transmits a PDSCH allocated to the user equipment 20 by the DCI and receives a PUSCH allocated to the user equipment 20 by the DCI. The transmission and reception unit 103 even exchanges messages (random access preambles, random access responses, and Messages 3 and 4) in the random access procedure with the user equipment 20.

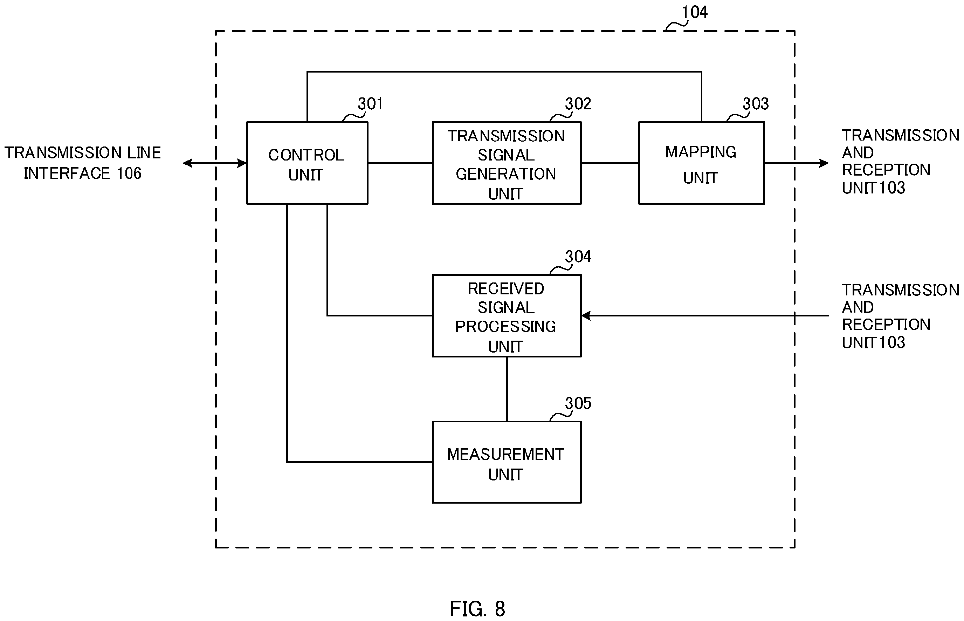

FIG. 8 is a diagram illustrating an exemplary functional configuration of the radio base station according to an embodiment of the present invention. FIG. 8 mainly illustrates functional blocks of feature portions in the present embodiment and the radio base station 10 also includes other functional blocks involved in wireless communication. The baseband signal processing unit 104 includes at least a control unit 301, a transmission signal generation unit 302, a mapping unit 303, a received signal processing unit 304, and a measurement unit 305, as illustrated as FIG. 8.

The control unit 301 controls the overall radio base station 10. The control unit 301 may be implemented as a controller, a control circuit, or a control device described on the basis of a common understanding in the technical field according to the present invention.

The control unit 301 controls, e.g., signal generation by the transmission signal generation unit 302 and signal allocation by the mapping unit 303. The control unit 301 further controls signal reception processing by the received signal processing unit 304 and signal measurement by the measurement unit 305.

The control unit 301 controls system information, PDSCH, and PUSCH resource allocation (scheduling). The control unit 301 further controls resource allocation to sync signals (e.g., a PSS (which may also be referred to as, e.g., an M-PSS (MTC PSS) or an NB-PSS) and an SSS (which may also be referred to as, e.g., an M-SSS (MTC SSS) or an NB-SSS), and downlink reference signals such as a CRS, a CSI-RS, and a DM-RS.

The control unit 301 controls the transmission signal generation unit 302 and the mapping unit 303 to allocate various signals to a narrow band and transmit them to the user equipment 20. The control unit 301 performs control to, e.g., transmit broadcast information (an MIB or an SIB (which may also be referred to as, e.g., an MTC-SIB or an NB-SIB)), a PDCCH (which may also be referred to as, e.g., an M-PDCCH or an NB-PDCCH), and a PDSCH for a downlink in a narrow band. The NB (Narrow Band) is a band (e.g., 180 kHz) narrower than the system band of the existing LTE system.

In this case, the control unit 301 performs control to notify the user equipment 20 of various types of information for specifying a second narrow band as a transition destination from a first narrow band in a system band before completion of random access. For example, the user equipment 20 may be notified of an SIB to allow the user equipment 20 to specify a second narrow band in a PRACH set across narrow bands by the SIB. In this case, a narrow band selected as the PRACH is specified as a second narrow band for an uplink, and a narrow band associated with the PRACH is specified as a second narrow band for a downlink. The narrow band associated with the PRACH may be notified by broadcast information.

The user equipment 20 may be notified of DCI for a downlink control channel to allow the user equipment 20 to specify a second narrow band by the DCI. In this case, an RA field for issuing an instruction of a random access response is set in the common search space. The user equipment 20 may also be notified of a random access response to allow the user equipment 20 to specify a second narrow band by a UL grant for the random access response. In this case, an RA field for specifying an uplink narrow band is set in the UL grant. The user equipment 20 may even be notified of broadcast information or Message 4 to allow the user equipment 20 to specify a second narrow band by the broadcast information or Message 4.

Broadcast information may be combined with an RAR window to allow the user equipment 20 to specify a second narrow band. In this case, the user equipment may be notified of the narrow band associated with the RAR window by the broadcast information to allow the user equipment 20 to specify a second narrow band in accordance with the RAR window in which a random access response is received.

The control unit 301 receives a PUSCH in the determined PUSCH resource in cooperation with the transmission and reception unit 103, the received signal processing unit 302, and the measurement unit 305. The control unit 301 transmits a PDSCH in the determined PDSCH resource in cooperation with the transmission signal generation unit 302, the mapping unit 303, and the transmission and reception unit 103.

The transmission signal generation unit 302 generates a downlink signal (e.g., a PDCCH, a PDSCH, a downlink reference signal, an SIB, or a message regarding the random access procedure) on the basis of an instruction from the control unit 301 and outputs them to the mapping unit 303. The transmission signal generation unit 302 may be implemented as a signal generator, a signal generation circuit, or a signal generation device described on the basis of a common understanding in the technical field according to the present invention.

The transmission signal generation unit 302 generates, e.g., DCI (also called, e.g., a DL assignment or a UL grant) for allocating a PUSCH and/or a PDSCH to the user equipment 20, on the basis of an instruction from the control unit 301. The PDSCH is encoded and modulated in accordance with, e.g., an encoding ratio and modulation scheme determined on the basis of, e.g., CSI (Channel State Information) from each user equipment 20.

The mapping unit 303 maps the downlink signal generated by the transmission signal generation unit 302 to a radio resource (e.g., a maximum of one resource block) in a predetermined narrow band on the basis of an instruction from the control unit 301 and outputs them to the transmission and reception unit 103. The mapping unit 303 may be implemented as a mapper, a mapping circuit, or a mapping device described on the basis of a common understanding in the technical field according to the present invention.

The received signal processing unit 304 performs reception processing (e.g., demapping, demodulation, and decoding) for received signals input from the transmission and reception unit 103. Examples of the received signals include uplink signals (e.g., a PUCCH, a PUSCH, and an uplink reference signal) transmitted from the user equipment 20. The received signal processing unit 304 may be implemented as a signal processor, a signal processing circuit, or a signal processing device described on the basis of a common understanding in the technical field according to the present invention.

The received signal processing unit 304 outputs information decoded by the reception processing to the control unit 301. The received signal processing unit 304 outputs received signals and signals after reception processing to the measurement unit 305.

The measurement unit 305 measures the received signals. The measurement unit 305 may be implemented as a gauge, a measurement circuit, or a measurement device described on the basis of a common understanding in the technical field according to the present invention.

The measurement unit 305 may measure, e.g., the received power (e.g., the RSRP (Reference Signal Received Power)), the reception quality (e.g., the RSRQ (Reference Signal Received Quality)), and the channel state of the signals. The measurement results may be output to the control unit 301.

### <User Equipment>

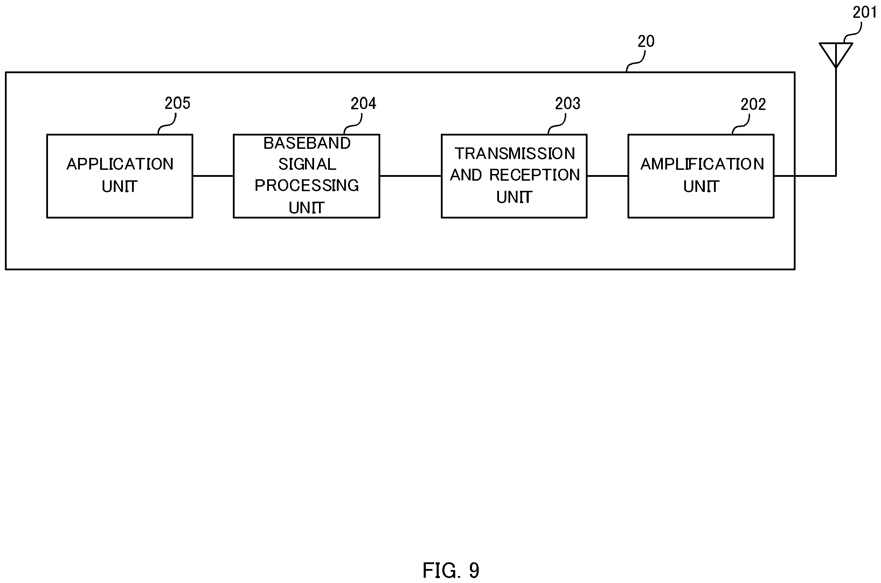

FIG. 9 is a diagram illustrating an exemplary configuration of an entire user equipment according to an embodiment of the present invention. The normal LTE terminal may behave as if it were an NB-IoT terminal, although a detailed description thereof will not be given herein. The user equipment 20 includes at least a transmission and reception antenna 201, an amplification unit 202, a transmission and reception unit 203, a baseband signal processing unit 204, and an application unit 205. The user equipment 20 may include, e.g., transmission and reception antennas 201, amplification units 202, and transmission and reception units 203.

A radio frequency signal received by the transmission and reception antenna 201 is amplified by the amplification unit 202. The transmission and reception unit 203 receives a downlink signal amplified by the amplification unit 202.

The transmission and reception unit 203 performs frequency conversion of the received signal into a baseband signal and outputs it to the baseband signal processing unit 204. The transmission and reception unit 203 may be implemented as a transmitter/receiver, a transmission and reception circuit, or a transmission and reception device described on the basis of a common understanding in the technical field according to the present invention. The transmission and reception unit 203 may serve as an integrated transmission and reception unit or include a transmission unit and reception unit.

The baseband signal processing unit 204 performs, e.g., FFT processing, error correction decoding, and retransmission control reception processing for an input baseband signal. User data on a downlink is transferred to the application unit 205. The application unit 205 performs, e.g., processing associated with layers above a physical layer and a MAC layer. Broadcast information of the data on a downlink is also transferred to the application unit 205.

User data on an uplink is input from the application unit 205 to the baseband signal processing unit 204. The baseband signal processing unit 204 performs, e.g., retransmission control information (HARQ-ACK) transmission processing, channel encoding, precoding, DFT (Discrete Fourier Transform) processing, and IFFT processing and transfers baseband signal to the transmission and reception unit 203.

The transmission and reception unit 203 converts the baseband signal output from the baseband signal processing unit 204 into a radio frequency band and transmits it. The radio frequency signal after frequency conversion by the transmission and reception unit 203 is amplified by the amplification unit 202 and transmitted from the transmission and reception antenna 201.

The transmission and reception unit 203 receives, e.g., sync signals, reference signals, control signals, and data signals from the radio base station 10 in a narrow band. The transmission and reception unit 203 transmits, e.g., reference signals, control signals, and data signals to the radio base station 10 in a narrow band. More specifically, the transmission and reception unit 203 receives DCI (Downlink Control Information). The transmission and reception unit 203 further receives a PDSCH allocated to the user equipment 20 by the DCI and transmits a PUSCH allocated to the user equipment 20 by the DCI. The transmission and reception unit 203 even exchanges messages (random access preambles, random access responses, and Messages 3 and 4) in the random access procedure with the radio base station 10.

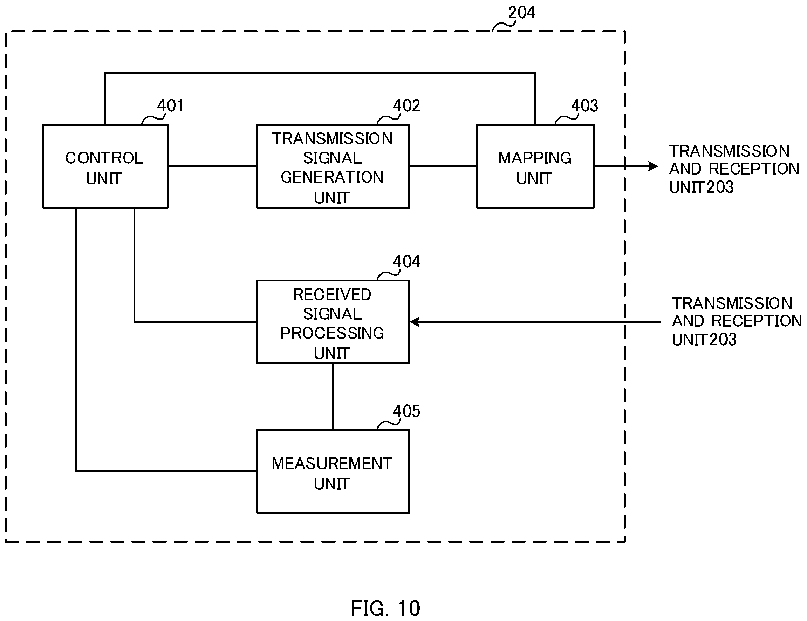

FIG. 10 is a diagram illustrating an exemplary functional configuration of the user equipment according to an embodiment of the present invention. FIG. 10 mainly illustrates functional blocks of feature portions in the present embodiment and the user equipment 20 also includes other functional blocks involved in wireless communication. The baseband signal processing unit 204 of the user equipment 20 includes at least a control unit 401, a transmission signal generation unit 402, a mapping unit 403, a received signal processing unit 404, and a measurement unit 405, as illustrated as FIG. 10.

The control unit 401 controls the overall user equipment 20. The control unit 401 may be implemented as a controller, a control circuit, or a control device described on the basis of a common understanding in the technical field according to the present invention.

The control unit 401 controls, e.g., signal generation by the transmission signal generation unit 402 and signal allocation by the mapping unit 403. The control unit 401 further controls signal reception processing by the received signal processing unit 404 and signal measurement by the measurement unit 405.

The control unit 401 obtains from the received signal processing unit 404, downlink signals (a PDCCH, a PDSCH, and downlink reference signals) transmitted from the radio base station 10. The control unit 401 controls generation of uplink data and UCI (Uplink Control Information) such as retransmission control information (HARQ-ACK) and CSI (Channel State Information) on the basis of, e.g., the downlink signals.

The control unit 401 performs control to specify a second narrow band as a transition destination from a first narrow band in a system band before completion of random access. The control unit 401 may specify a second narrow band by, e.g., a PRACH set across narrow bands by an SIB received from the radio base station 10. In this case, the control unit 401 may specify a narrow band selected as a set resource of the PRACH as a second narrow band for an uplink, and a narrow band associated with the set resource of the PRACH as a second narrow band for a downlink. The narrow band associated with the PRACH may be notified by broadcast information.

The control unit 401 may specify a second narrow band at a predetermined timing in the random access procedure. For example, the control unit 401 may specify a narrow band indicated by DCI for a downlink control channel as a second narrow band, or specify a narrow band indicated by a UL grant for a random access response as a second narrow band. Although the control unit 401 confirms an RA field in the UL grant, it may specify a second narrow band by a set resource of a PRACH when no RA field is available. The control unit 401 may specify a second narrow band by, e.g., a set resource of a PRACH, broadcast information, or Message 4.

The control unit 401 may also specify a second narrow band by combining broadcast information with an RAR window. In this case, the narrow band associated with the RAR window may be notified by the broadcast information. The control unit 401 may even specify a second narrow band in the random access procedure by a set resource of a PRACH set before random access.

Upon specifying a second narrow band, the control unit 401 performs control to make a transition of the band used from the first narrow band to the second narrow band. In this case, the control unit 401 makes a transition of the band used from the first narrow band to the second narrow band at one of the timings after SIB reception, after transmission of a random access preamble, after reception of a random access response, after transmission of Message 3, after reception of an ACK signal with respect to Message 3, after reception of Message 4, and after RRC connection.

The control unit 401 may make a transition of only the band used on an uplink to a second narrow band without making a transition of the band used on a downlink from a first narrow band. In this case, only a first narrow band is defined on a downlink and a second narrow band is used only on an uplink. The control unit 401 is not limited to a configuration which specifies a second narrow band from narrow bands set by an SIB. The control unit 401 may specify a second narrow band from any set of narrow bands in the system band.

The control unit 401 transmits a PUSCH by the above-mentioned PUSCH resource in cooperation with the transmission signal generation unit 402, the mapping unit 403, and the transmission and reception unit 203. The control unit 401 receives a PDSCH by the above-mentioned PDSCH resource in cooperation with the transmission and reception unit 203, the received signal processing unit 404, and the measurement unit 405.

The transmission signal generation unit 402 generates an uplink signal (e.g., a PUCCH, a PUSCH, or an uplink reference signal) on the basis of an instruction from the control unit 401 and outputs it to the mapping unit 403. The transmission signal generation unit 402 may be implemented as a signal generator, a signal generation circuit, or a signal generation device described on the basis of a common understanding in the technical field according to the present invention.

The transmission signal generation unit 402 generates, e.g., UCI (Uplink Control Information) and/or uplink data on the basis of an instruction from the control unit 401. The transmission signal generation unit 402 further generates a PUSCH for transmitting UCI and/or uplink data, on the basis of an instruction from the control unit 401. For example, the transmission signal generation unit 402 is instructed by the control unit 401 to generate a PUSCH when it receives DCI for allocating a PUSCH to the user equipment 20. The transmission signal generation unit 402 further generates a PUCCH for transmitting UCI, on the basis of an instruction from the control unit 401.

The mapping unit 403 maps the uplink signal generated by the transmission signal generation unit 402 to a resource (e.g., a PUSCH resource or a PUCCH resource) on the basis of an instruction from the control unit 401 and outputs them to the transmission and reception unit 203. The mapping unit 403 may be implemented as a mapper, a mapping circuit, or a mapping device described on the basis of a common understanding in the technical field according to the present invention.

The received signal processing unit 404 performs reception processing (e.g., demapping, demodulation, and decoding) for received signals input from the transmission and reception unit 203. Examples of the received signals include downlink signals (e.g., a downlink control signal, a downlink data signal, and a downlink reference signal) transmitted from the radio base station 10. The received signal processing unit 404 may be implemented as a signal processor, a signal processing circuit, or a signal processing device described on the basis of a common understanding in the technical field according to the present invention.

The received signal processing unit 404 outputs information decoded by the reception processing to the control unit 401. The received signal processing unit 404 outputs, e.g., broadcast information, system information, RRC signaling, and DCI to the control unit 401. The received signal processing unit 404 outputs received signals and signals after reception processing to the measurement unit 405.

The measurement unit 405 measures the received signals. The measurement unit 405 may be implemented as a gauge, a measurement circuit, or a measurement device described on the basis of a common understanding in the technical field according to the present invention.

The measurement unit 405 may measure, e.g., the received power (e.g., the RSRP), the reception quality (e.g., the RSRQ), and the channel state of the received signals. The measurement results may be output to the control unit 401.

### <Hardware Configuration>

The block diagrams used to describe the above-described embodiment represent blocks of functional units. These functional blocks (constituent units) are implemented in any combination of hardware and/or software. The means for implementing each functional block is not particularly limited. In other words, each functional block may be implemented as one physically coupled device or implemented by at least two physically separate devices connected in a wired or wireless manner.

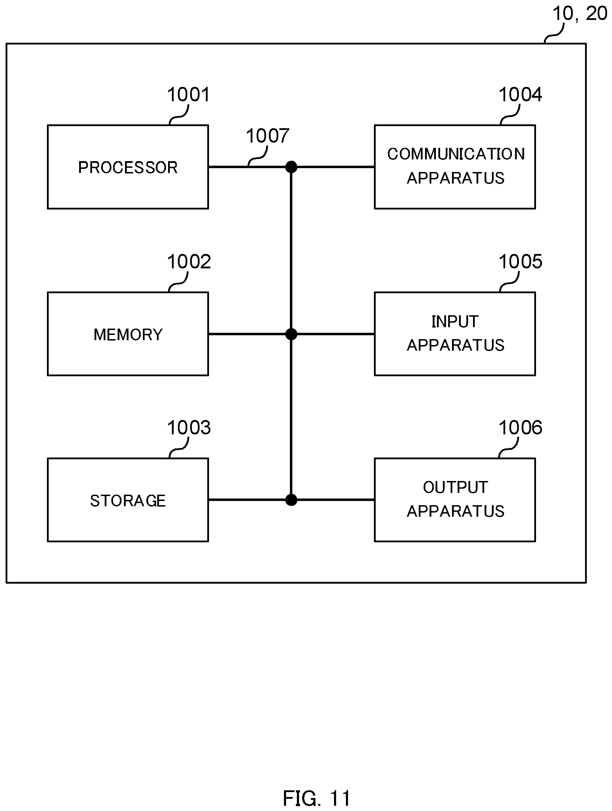

A radio base station, a user equipment, and the like according to an embodiment of the present invention may serve as computers which perform the processes of a wireless communication method according to the present invention. FIG. 11 is a diagram illustrating an exemplary hardware configuration of the radio base station and the user equipment according to an embodiment of the present invention. The above-mentioned radio base station 10 and user equipment 20 may be physically implemented as a computer apparatus including, e.g., a processor 1001, a memory 1002, a storage 1003, a communication apparatus 1004, an input apparatus 1005, an output apparatus 1006, and a bus 1007.

In the following description, the word "apparatus" may be read as a circuit, a device, a unit, or the like. The hardware configuration of the radio base station 10 and the user equipment 20 may include one or more apparatuses illustrated in the drawings or may not include some of the apparatuses.

Each function of the radio base station 10 and the user equipment 20 is implemented by reading predetermined software (program) onto hardware such as the processor 1001 or the memory 1002 to perform arithmetic operations using the processor 1001, and controlling communication using the communication apparatus 1004 and data read and/or write in the memory 1002 and the storage 1003.

The processor 1001, for example, controls the overall computer by running the operating system. The processor 1001 may be implemented as a CPU (Central Processing Unit) including, e.g., an interface with a peripheral apparatus, a control apparatus, an arithmetic apparatus, and a register. The above-mentioned baseband signal processing unit 104 (204) and the call processing unit 105, for example, may be implemented in the processor 1001.

The processor 1001 reads out a program (program code), a software module, and data from the storage 1003 and/or the communication apparatus 1004 to the memory 1002 and performs various processes in accordance with them. As the program, a program for causing the computer to execute at least some of the operations described in the above embodiment is used. The control unit 401 of the user equipment 20, for example, may be implemented as a control program stored in the memory 1002 and running on the processor 1001, and the remaining functional blocks may be implemented similarly.

The memory 1002 serves as a computer-readable recording medium and may be implemented as at least one of, e.g., a ROM (Read Only Memory), an EPROM (Erasable Programmable ROM), and a RAM (Random Access Memory). The memory 1002 may also be called, e.g., a register, a cache, or a main memory (main storage device). The memory 1002 may store, e.g., a software module and a program (program code) which can be executed to carry out a wireless communication method according to an embodiment of the present invention.

The storage 1003 serves as a computer-readable recording medium and may be implemented as at least one of, e.g., an optical disk such as a CD-ROM (Compact Disc-ROM), a hard disk drive, a flexible disk, a magnetooptical disk, and a flash memory. The storage 1003 may also be referred to as an auxiliary storage apparatus.

The communication apparatus 1004 serves as hardware (transmission and reception device) for communication between computers via a wired and/or wireless network, and may also be referred to as, e.g., a network device, a network controller, a network card, or a communication module. The above-mentioned transmission and reception antenna 101 (201), the amplification unit 102 (202), the transmission and reception unit 103 (203), and the transmission line interface 106, for example, may be implemented in the communication apparatus 1004.

The input apparatus 1005 serves as an input device (e.g., a keyboard or a mouse) which receives input from the outside. The output apparatus 1006 serves as an output device (e.g., a display or a speaker) which outputs to the outside. The input apparatus 1005 and the output apparatus 1006 may form an integrated configuration (e.g., a touch panel).

The apparatuses such as the processor 1001 and the memory 1002 are connected to each other via the bus 1007 for information communication. The bus 1007 may be implemented as a single bus or different buses between the apparatuses.

The radio base station 10 and the user equipment 20 may include hardware such as a microprocessor, a DSP (Digital Signal Processor), an ASIC (Application Specific Integrated Circuit), a PLD (Programmable Logic Device), or an FPGA (Field Programmable Gate Array), and the hardware may implement some or all of respective functional blocks. For example, the processor 1001 may be implemented as at least one of these pieces of hardware.

The terms described in this specification and/or the terms involved in understanding this specification may be replaced with terms having the same or similar meanings. The channels and/or symbols, for example, may be replaced with signals (signaling). The signals may be implemented as messages. The CCs (Component Carriers) may also be referred to as, e.g., cells, frequency carriers, or carrier frequencies.

The radio frame may include one or more periods (frames) in a time domain. Each of these one or more periods (frames) forming the radio frame may also be called a subframe. The subframe may include one or more slots in the time domain. The slot may include one or more symbols (e.g., OFDM symbols or SC-FDMA symbols) in the time domain.

The radio frame, the subframe, the slot, and the symbol are units of time to transmit signals. The radio frame, the subframe, the slot, and the symbol may be referred to as other names corresponding to them. For example, one subframe may be referred to as a TTI (Transmission Time Interval), a set of consecutive subframes may be referred to as a TTI, or one slot may be referred to as a TTI. In other words, the subframe or the TTI may be a subframe (1 ms) in the existing LTE, a period (e.g., 1 to 13 symbols) shorter than 1 ms, or a period longer than 1 ms.

The TTI means, for example, the minimum time unit of scheduling in wireless communication. For example, in the LTE systems, the radio base station performs scheduling in which radio resources (e.g., a frequency bandwidth and a transmitted power available in each user equipment) are allocated to each user equipment, for each TTI. The definition of the TTI is not limited to this.

A TTI having a time length of 1 ms may also be referred to as, e.g., a normal TTI (the TTI in LTE Rel. 8 - 12), a long TTI, a normal subframe, or a long subframe. A TTI shorter than the normal TTI may be referred to as, e.g., a shortened TTI, a short TTI, a shortened subframe, or a short subframe.

The RB (Resource Block) is a unit of resource allocation in a time domain and a frequency domain, and may include one or more consecutive subcarriers in the frequency domain. The RB may include one or more symbols or may be one slot, one subframe, or the length of one TTI in the time domain. One TTI or one subframe may include one or more resource blocks. The RB may also be referred to as, e.g., a PRB (Physical RB (Resource Block)), a PRB pair, or an RB pair.

The resource block may include one or more REs (Resource Elements). One RE may serve as, e.g., a radio resource region having one subcarrier or one symbol.

The structures of, e.g., the above-mentioned radio frame, subframe, slot, and symbol are merely examples. Various changes can be made to configurations such as the number of subframes included in the radio frame, the number of slots included in the subframe, the numbers of symbols and RBs included in the slot, the number of subcarriers included in the RB, and the number of symbols, the symbol length, and the CP (Cyclic Prefix) length in the TTI.

The information, parameters, and the like described in this specification may be represented by absolute values, values relative to certain values, or other types of equivalent information. The radio resources, for example, may be indicated by predetermined indices.

The information, signals, and the like described in this specification may be represented using any of diverse techniques. Data, instructions, commands, information, signals, bits, symbols, chips, and the like that may be referred to throughout the above description, for example, may be represented by voltages, currents, electromagnetic waves, magnetic fields or particles, optical fields or photons, or any combination thereof.

Software, instructions, information, and the like may be transmitted and received via transmission media. When, for example, software is transmitted from websites, servers, or other remote sources using wired technologies (e.g., a coaxial cable, an optical fiber cable, a twisted pair, and a DSL (Digital Subscriber Line)) and/or wireless technologies (e.g., infrared and microwave technologies), these wired technologies and/or wireless technologies fall within the definition of the transmission media.

The radio base station in this specification may be read as a user equipment. The respective aspects/embodiments of the present invention may be applied to, e.g., the substitution of D2D (Device-to-Device) communication between user equipment for communication between the radio base station and the user equipment. In this case, the user equipment 20 may have the above-mentioned functions of the radio base station 10. Further, the words "uplink," "downlink," and the like may be read as "sides." The uplink channel, for example, may be read as a side channel.

Similarly, the user equipment in this specification may be read as a radio base station. In this case, the radio base station 10 may have the above-mentioned functions of the user equipment 20.

The respective aspects/embodiments described in this specification may be used solely, used in combination, or switchably used upon execution. The notification of predetermined information (e.g., the notification of "X") is not limited to explicit notification, and may be done implicitly (e.g., without notification of the predetermined information).

The information notification is not limited to the aspects/embodiments described in this specification and may be done using other methods. The information notification may be done by, e.g., physical layer signaling (e.g., DCI (Downlink Control Information) or UCI (Uplink Control Information)), upper layer signaling (e.g., RRC (Radio Resource Control) signaling, broadcast information (e.g., an MIB (Master Information Block) or an SIB (System Information Block)), or MAC (Medium Access Control) signaling), other signals, or a combination thereof. The RRC signaling may also be referred to as RRC messages, which may include, e.g., RRC connection setup (RRCConnectionSetup) messages and RRC connection reconfiguration (RRCConnectionReconfiguration) messages. The MAC signaling may be notified by, e.g. a MAC CE (Control Element).

The respective aspects/embodiments described in this specification may be applied to systems which utilize LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA2000, UMB (Ultra Mobile Broadband), IEEE 802.11 (Wi-Fi®), IEEE 802.16 (Wi-MAX®), IEEE 802.20, UWB (Ultra-WideBand), Bluetooth®, and systems using other types of appropriate wireless communication methods, and/or next-generation systems extended on the basis of these systems.

The processing procedures, sequences, flowcharts, and the like of the aspects/embodiments described in this specification may be executed in different orders as long as consistency can be ensured. The method described in this specification, for example, presents elements of various steps in an exemplary order, and is not limited to the presented specific order.

Although the present invention has been described in detail above, it will be apparent for those skilled in the art that the present invention is not limited to the embodiments described in this specification. For example, the above-described embodiments may be used independently or in combination. The present invention can be carried out as modifications and changed aspects without departing from the spirit and scope of the present invention defined by the description of the scope of claims. The description of this specification is for illustrative purpose and is not intended to limit the present invention in any way.

This application is based on Japanese Patent Application No. 2016-020310 filed on February 4, 2016, the contents of which are incorporated herein in their entirety.

## Claims

1. A user equipment in a wireless communication system in which communication is performed using an anchor carrier and a different carrier from the anchor carrier, the user equipment being an NB-IoT terminal, the user equipment comprising:
a transmission and reception unit that performs transmission and reception of a message in a random access procedure with a radio base station; and
a control unit that configures a carrier signaled from the radio base station to be the different carrier.

2. The user equipment according to claim 1, wherein NPBCH, NPSS and NSSS are not received in the different carrier.

3. The user equipment according to claim 1 or 2, wherein the transmission and reception unit receives system information from the radio base station, and the control unit configures the different carrier from a plurality of bands set by the system information.

4. The user equipment according to any one of claims 1 to 3, wherein the control unit configures the different carrier at a given timing in the random access procedure.

5. The user equipment according to any one of claims 1 to 4, wherein the control unit makes transition of a usage band from the anchor carrier to the different carrier at any one of timings including after transmission of a random access preamble, after reception of a random access response, after transmission of Message 3, after reception of an acknowledgement (ACK) signal with respect to Message 3, after transmission of Message 4, and after RRC connection.

6. A radio base station in a wireless communication system in which communication is performed using an anchor carrier and a different carrier from the anchor carrier, the radio base station comprising:
a transmission and reception unit that performs transmission and reception of a message in a random access procedure with an NB-IoT terminal; and
a control unit that controls to provide carrier information for configuring the different carrier to the NB-IoT terminal.

7. A wireless communication method for a user equipment in a wireless communication system in which communication is performed using an anchor carrier and a different carrier from the anchor carrier, the user equipment being an NB-IoT terminal, the user equipment comprising:
performing transmission and reception of a message in a random access procedure with a radio base station; and
configuring a carrier signaled from the radio base station to be the different carrier.
